# EUROPÄISCHE PATENTSCHRIFT

(11) **EP 0 733 161 B1**
(45) Veröffentlichungstag und Bekanntmachung des Hinweises auf die Patenterteilung: **19.11.1997**
(21) Anmeldenummer: 94919810.5
(22) Anmeldetag: 21.07.1994
(51) Int. Cl.: F02F 1/32, F02F 1/42

(54) **EINZYLINDER-DIESELMOTOR**
ONE-CYLINDER DIESEL ENGINE
MOTEUR DIESEL MONOCYLINDRIQUE

(30) Priorität: 10.12.1993 DE 4342139
(43) Veröffentlichungstag der Anmeldung: 25.09.1996
(73) Patentinhaber: Motorenfabrik Hatz GmbH & Co. KG, D-94099 Ruhstorf (DE)
(72) Erfinder: Absenger, Erich, D-94032 Passau (DE)
(74) Vertreter: Möhring, Friedrich
(86) Internationale Anmeldenummer: IB9400222
(87) Internationale Veröffentlichungsnummer: WO9516119

(56) Entgegenhaltungen:
- DE-A- 1 426 101
- DE-A- 3 523 194
- PATENT ABSTRACTS OF JAPAN vol. 11, no. 238 (M-613) 5. August 1987 & JP,A,62 050 064 (MITSUBISHI) 4. März 1987
- PATENT ABSTRACTS OF JAPAN vol. 7, no. 29 (M-191) 5. Februar 1983 & JP,A,57 183 522 (TOYOTA) 11. November 1982
- PATENT ABSTRACTS OF JAPAN vol. 11, no. 74 (M-568) 6. März 1987 & JP,A,61 229 962 (HONDA) 14. Oktober 1986

## Beschreibung

Die vorliegende Erfindung betrifft einen Einzylinder-Dieselmotor mit einem neuartigen Zylinderkopf und eine Gießform zum Herstellen eines derartigen Zylinderkopfs.

Während bei einem derartigen Zylinderkopf die Form des Abgasauslasses gießtechnisch weitgehend unkritisch ist, erfordert der Einlaßkanal für die Verbrennungsluft wegen seines als Drallkanal ausgebildeten Abschnitts besondere gießtechnische Maßnahmen. Ein derartiger Drallkanal zeichnet sich durch eine komplexe Raumform in Art einer Spirale aus, mit dem Ziel, die Drallzahl der während des Ansaughubs angesaugten Luft zur Verbesserung der Gemischbildung im Brennraum zu erhöhen. Daher werden bislang Zylinderköpfe für Dieselmotoren im Kokillenguß oder Sandguß hergestellt, wobei für die Ausformung des Drallkanals Sandkerne verwendet werden, die zum Entfernen wieder zerstört werden.

Ein als einteiliges Gußteil in der herkömmlichen Weise hergestellter Zylinderkopf für einen Einzylinder-Dieselmotor, wobei der Einlaßkanal für die Verbrennungsluft einen Drallkanal umfaßt, der in einen auf der Rückseite des Einlaßventils angeordneten Drallraum mündet, ist in der deutschen Offenlegungsschrift DE-A-1426101 beschrieben.

Die Herstellung eines derartigen Zylinderkopfs mit Drallkanal nach dem kostengünstigeren Druckgußverfahren, bei welchem die Kerne nach dem Gießen gezogen werden, wurde insbesondere wegen der komplexen Ausbildung des Drallkanals von der Fachwelt bisher nicht für möglich gehalten.

Bei einer bekannten Druckgußform (JP-A-61229962) zum Herstellen eines einteiligen Zylinderkopfs sind zylindrische Einlaß- und Auslaßkanäle vorgesehen, welche auf einfache Weise mittels Metallkernen geformt werden, die nach dem Gießvorgang geradlinig gezogen werden.

Nach dem von der vorliegenden Erfindung eingeschlagenen Weg ist es erstmals möglich, einen Zylinderkopf der genannten Art als einteiliges Druckgußteil herzustellen, und wobei sich der Drallkanal, in Richtung der Zylinderachse gesehen, nach außen hin zu beiden Seiten einer Bezugslinie zunehmend verbreitert, welche durch eine Tangente an einem vom Drallkanal umschlungenen, den Ventilschaft des Einlaßventils enthaltenden Kernteil des Zylinderkopfs gebildet ist, die durch den Schnittpunkt zwischen der Außenkontur des Drallkanals und dem an die Ventilsitzbohrung anschließenden Grundkreis des Drallraums, in welchen der Drallkanal einmündet, verläuft. Bei der erfindungsgemäß vorgeschlagenen Form des Drallkanals ist dessen Außenkontur, wiederum in Richtung der Zylinderachse gesehen, etwas gestreckter verglichen mit bekannten Ausführungsformen. Eine dadurch bedingte geringfügig niedrigere Drallzahl kann jedoch angesichts der durch Anwendung des Druckgußverfahrens möglichen Kostenreduzierung bei der Herstellung in Kauf genommen werden. Dabei geht es nicht nur um die Erzielung von Kostenvorteilen sondern auch um Gewichtsvorteile, dadurch, daß Zylinderköpfe mit hoher Maßgenauigkeit als einteilige Gußstücke aus Aluminiumlegierung hergestellt werden können, die überdies allen Anforderungen hinsichtlich des Ablaufs der Verbrennungsvorgänge im Brennraum sowie des Kraftstoffverbrauchs genügen.

Eine erfindungsgemäße Gießform zum Herstellen eines einteiligen Zylinderkopfs für einen Einzylinder-Dieselmotor mit einem Einlaßkanal für die Verbrennungsluft und einem Auslaßkanal für das Abgas umfaßt die Merkmale,
- daß eine Druckgußform verwendet wird,
- daß zum Ausformen des Einlaßkanals ein aus zwei Schiebern bestehender Kern vorgesehen ist,
- daß ein erster Schieber mit seitlicher Ausziehrichtung im wesentlichen dem nach außen führenden Abschnitt eines Drallkanals entspricht und
- daß ein zweiter Schieber mit parallel zur Zylinderachse verlaufender Ausziehrichtung im wesentlichen einem auf der Rückseite des Einlaßventils angeordneten Drallraum entspricht, zuzüglich dem in den Drallraum mündenden inneren Abschnitt des Drallkanals.

Hinsichtlich der Ausbildung der beiden Schieber ist dabei vorgesehen, daß diese an eine gemeinsame, im wesentlichen parallel zur Zylinderachse verlaufende Trennfläche angrenzen. In Richtung der Zylinderachse gesehen, befindet sich diese Trennfläche innerhalb des an die Ventilsitzbohrung anschließenden Grundkreises des Drallraumes.

Zweckmäßigerweise umfaßt die Trennfläche eine zur seitlichen Ausziehrichtung etwa parallele Trennebene, die, nach einer weiteren Ausgestaltung, in Richtung der Zylinderachse gesehen, mit geringem Abstand von der Innenkontur des Drallkanals verlaufen kann und an diese über eine senkrecht zur Trennebene verlaufende Querebene angeschlossen sein kann. Durch die letztgenannte Variante wird die Ausbildung einer empfindlichen spitzen Kante auf seiten des zweiten Schiebers im Bereich der Innenkontur des Drallkanals vermieden.

In ähnlicher Weise ist vorgesehen, daß zum Ausformen des Auslaßkanals ein aus zwei Schiebern bestehender Kern verwendet wird,
- wobei ein dritter Schieber mit seitlicher Ausziehrichtung im wesentlichen einem nach außen mündenden Kanalabschnitt mit geradliniger Strömungsachse entspricht und
- wobei ein vierter Schieber mit parallel zur Zylinderachse verlaufender Ausziehrichtung im wesentlichen einem auf der Rückseite des Auslaßventils angeordneten Abgasraum entspricht, aus welchem der Kanalabschnitt ausmündet.

Dabei ist hinsichtlich der Form des Auslaßkanals weiterhin vorgesehen, daß das innere Ende des Kanalabschnitts ein den Ventilschaft des Auslaßventils enthaltendes Kernteil der Zylinderkopfs halbkreisförmig umfaßt.

Beim Herstellen des Zylinderkopfs als Druckgußteil tritt noch das weitere Problem auf, daß mehrere durch Rippen getrennte Hohlräume für die Luftkühlung im Bereich des Zylinderkopfs miteinander kommunizieren müssen, damit die Kühlluft gleichmäßig verteilt werden kann.

Um dies sicherzustellen ist erfindungsgemäß weiterhin vorgesehen, daß parallel zur Zylinderachse durch die Decke des Zylinderkopfs ausziehbare stabförmige Formkerne vorhanden sind, mit welchen Durchbrüche in benachbarte Kühlluftkanäle voneinander trennenden Rippen erzeugt werden. Mit derartigen bevorzugt zylindrischen Formkernen ist es möglich, im Bereich der Rippenansätze Durchbrechungen zu plazieren, die eine wirksame Umströmung des Zylinderkopfs und das Zusammenströmen der Kühlluft aus den einzelnen Kühlluftkanälen ermöglichen. Die für das Ziehen der stabförmigen Formkerne erforderlichen Bohrungen in der Decke des Zylinderkopfs werden zweckmäßig durch einen Schraubverschluß oder durch Einpressen von Verschlußkörpern gasdicht verschlossen.

Im Bereich der Trennflächen zwischen den beiden Kernen sowohl des Einlaß- als auch des Auslaßkanals können sich in den Wandbereichen dieser Kanäle schwache Kanten ausbilden, die zumindest im Auslaßkanal nicht störend sind; gegebenenfalls kann es jedoch im Einlaßkanal zweckmäßig sein, derartige Kanten durch eine Nachbearbeitung zu beseitigen.

Die vorliegende Erfindung stellt einen weiteren Schritt zur Herstellung von kostengünstigen Kleindieselmotoren dar, wie sie für die industrielle Anwendung z. B. bei Baumaschinen in einem Leistungsbereich bis hinab zu 3 kW besonders gefragt sind.

Im folgenden wird ein Ausführungsbeispiel der Erfindung anhand der Zeichnung erläutert. Es zeigt
Fig. 1 einen zur Zylinderachse parallelen Teilschnitt gemäß I-I der Fig. 2 durch einen Einzylinder-Dieselmotor im Bereich des Zylinderkopfs,
Fig. 2 einen Schnitt gemäß II-II der Fig. 1 und
Fig. 3 einen Schnitt gemäß III-III der Fig. 2.

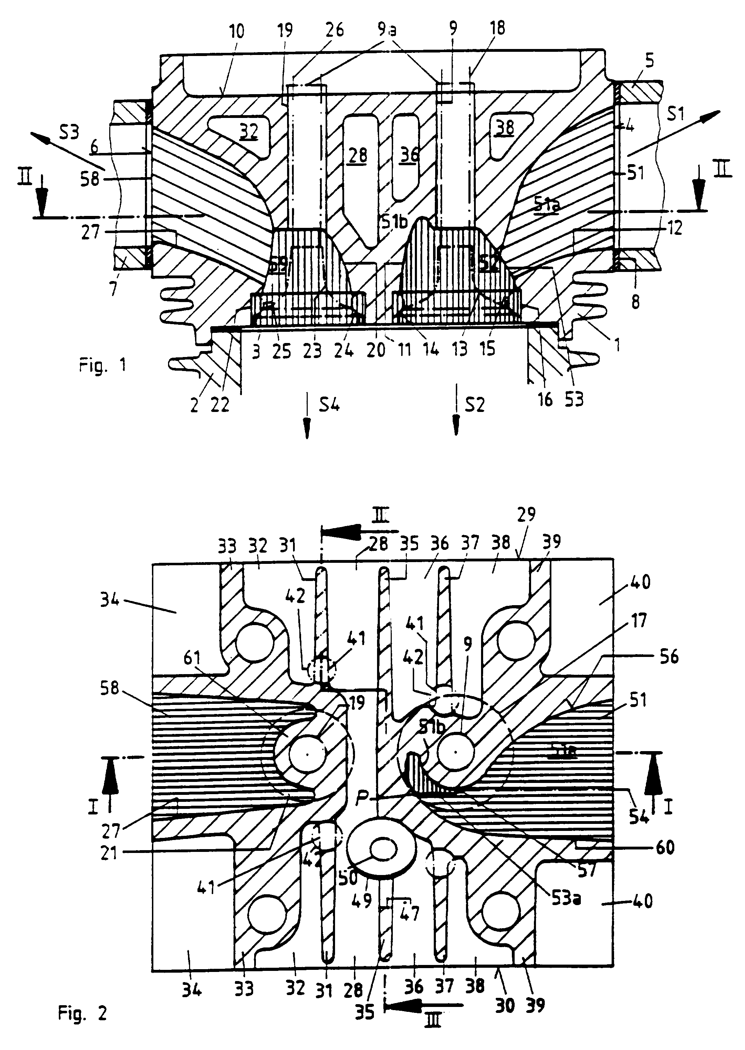

Die Fig. 1 bis 3 zeigen jeweils Schnittdarstellungen durch den Zylinderkopf 1 eines Einzylinder-Dieselmotors, wobei der Zylinderkopf 1 so ausgebildet ist, daß er nach dem Druckgußverfahren hergestellt werden kann. Gemäß Fig. 1 ist unterhalb des Zylinderkopfs 1 noch das obere Ende des Zylinders 2 mit zwischen den beiden Teilen angeordneter Zylinderkopfdichtung 3 dargestellt. Außerdem ist auf seiten des Einlaßkanals 4 eine Anschlußleitung 5 für die Verbrennungsluft und auf seiten des Auslaßkanals 6 der Abgaskrümmer 7, jeweils als Rohrabschnitt, gezeichnet. Die Anschlußleitung 5 und der Abgaskrümmer 7 sind jeweils über eine entsprechende Ringdichtung 8 gasdicht an den entsprechenden Seitenwänden des Zylinderkopfs 1 angeschlossen.

Eine zur Zylinderachse parallele Durchgangsbohrung 9, in welche eine Ventilführungshülse 9a eingepreßt ist, verbindet die Oberseite 10 des Zylinderkopfs 1 mit einem Drallraum 11, in welchen ein Drallkanal 12 für den Lufteinlaß mündet. Im Inneren des Drallraumes 11 sitzt das Einlaßventil 13 mit seinem Ventilsitz 14 unterhalb eines Ventilsitzrings 15, wobei sowohl das Einlaßventil 13 als auch der Ventilsitzring 15 mit strichpunktierten Linien eingezeichnet sind. Der Ventilsitzring 15 ist eingepaßt in eine Ventilsitzbohrung 16, an welche der Drallraum 11 mit seinem Grundkreis 17 anschließt. Der Inhalt des Drallraums 11 und der Ventilsitzbohrung 16 ist durch eine zur Zylinderachse parallele Schraffur angegeben. Innerhalb der Durchgangsbohrung 9 sind, ebenfalls mit strichpunktierten Linien, die Ventilführungshülse 9a und der Ventilschaft 18 des Einlaßventils eingezeichnet.

Eine weitere zur Zylinderachse parallele Durchgangsbohrung 19 verbindet die Oberseite 10 des Zylinderkopfs 1 mit einem Abgasraum 20, dessen Grundkreis 21 an das obere Ende der Ventilsitzbohrung 22 für das Auslaßventil 23 anschließt. Der Ventilsitz 24 des Auslaßventils 23 liegt in der gezeichneten Schließstellung des Auslaßventils 23 von unten an dem in die Ventilsitzbohrung 22 eingepaßten Ventilsitzring 25 an. Der Ventilsitzring 25, das Auslaßventil 23, die Ventilführungshülse 9a und der Ventilschaft 26 des Auslaßventils 23 sind jeweils mit strichpunktierten Linien eingezeichnet. Ein Kanalabschnitt 27 des Auslaßkanals 6 mündet mit seinem inneren Ende in den Abgasraum 20.

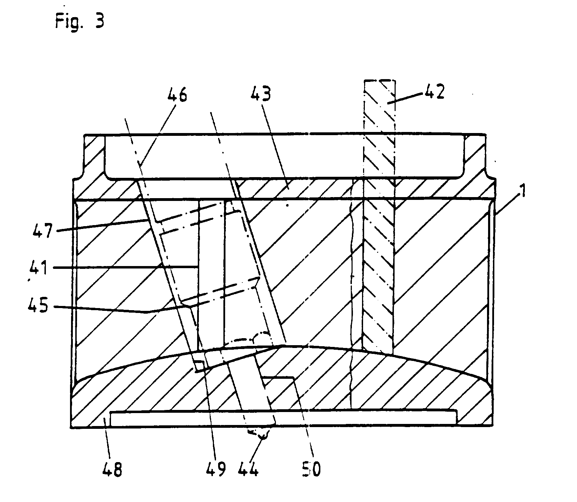

Wie man besser in Fig. 2 erkennt, weist der Zylinderkopf 1 einen mittleren Luftkanal 28 auf, welcher durchgehend von einer Stirnseite 29 zur gegenüberliegenden Stirnseite 30 des Zylinderkopfs 1 verläuft. Zu beiden Seiten des mittleren Luftkanals 28 schließen sich weitere zwischen Rippen gebildete Luftkanäle an, nämlich nach links eine Rippe 31, ein Luftkanal 32, eine weitere Rippe 33 und ein Eckausschnitt 34, sowie nach rechts eine Rippe 35, ein Luftkanal 36, eine weitere Rippe 37, ein weiterer Luftkanal 38, eine weitere Rippe 39 und ein Eckausschnitt 40. Die entsprechenden Bauteile finden sich auf der gegenüberliegenden Stirnseite 29 des Zylinderkopfs 1; sie sind der Übersichtlichkeit wegen mit den selben Bezugszeichen versehen, obwohl geringfügige maßliche Abweichungen erkennbar sind. Obwohl die Luftkanäle 32, 28, 36, 38 zwischen den beiden Stirnseiten 29, 30 des Zylinderkopfs 1, wenn auch zum Teil nur mit stark reduzierten Querschnitten durchgehend sind, ist es im Sinne einer verbesserten Luftkühlung zweckmäßig, eine Umspülung der heißen inneren Kernteile des Zylinderkopfs 1 dadurch zu ermöglichen, daß am jeweils inneren Ende der Rippen 31, 37 Durchbrüche 41 ausgeformt werden. Dies wird gießtechnisch in der Weise verwirklicht, daß, wie in Fig. 3 dargestellt, stabförmige Formkerne 42 vorgesehen sind, die nach dem Gießen gezogen werden, so daß diese Durchbrüche 41 im Bereich der Rippen 31, 37 entstehen. Die stabförmigen Formkerne 42 sind auch in Fig. 2 durch strichpunktierte Kreise angedeutet. Die Formkerne 42 werden durch die Decke 43 des Zylinderkopfs 1 nach oben ausgezogen, wonach die in der Decke 43 verbleibenden Bohrungen durch Einbringen eines (nicht gezeigten) Verschlußkörpers gasdicht verschlossen werden. Ferner ist in Fig. 3 noch die Einspritzdüse 44 mit Überwurfmutter 45 und Düsenhalter 46 durch strichpunktierte Linien innerhalb eines Ausschnitts 47 der Rippe 35 eingezeichnet. Dementsprechend erkennt man im Bodenteil 48 des Zylinderkopfs 1 den durch nachträgliches Fräsen erzeugten Sitz 49 für die Überwurfmutter 45 der Einspritzdüse 44 sowie die Gehäusebohrung 50 für deren Durchtritt durch das Bodenteil 48.

In den Fig. 1 und 2 sind schließlich noch die aus jeweils zwei Schiebern bestehenden Kerne für den Einlaßkanal 4 und für den Auslaßkanal 6 eingezeichnet. Der Einlaßkanal 4 umfaßt einen ersten Schieber 51 mit schräg nach rechts oben verlaufender Schraffur, welcher im wesentlichen den Drallkanal 12 ausbildet, sowie einen zweiten Schieber 52, welcher im wesentlichen dem Drallraum 11 entspricht. Beide Schieber 51, 52 werden jeweils in einer parallel zur ihrer Schraffur verlaufenden Richtung gemäß den Pfeilen S1 und S2 ausgezogen. Sie besitzen eine gemeinsame Trennfläche 53, welche eine Trennebene 53a umfaßt, die parallel zur Ausziehrichtung S1 und mit geringem Abstand zu einem vom Drallkanal 12 umschlungenen Kernteil 55 des Zylinderkopfs verläuft. Der Abstand der Trennebene 53a von diesem Kernteil 55 bzw. der Innenkontur 56 des Drallkanals 12 wird durch eine schmale zur Trennebene 53a senkrecht verlaufende Querebene 57 überbrückt. Auf diese Weise wird die Ausbildung eines spitzen inneren Endes des zweiten Schiebers 52 vermieden. Der Schieber 51 entspricht im wesentlichen einem äußeren Abschnitt 51a des Drallkanals 12, wobei dessen in Fig. 2 gezeichneter innerer Abschnitt 51b dem zweiten Schieber 52 zuzuschlagen ist, da anderenfalls der erste Schieber 51 nicht aus dem Gußstück gezogen werden könnte.

Für den Auslaßkanal 6 gestaltet sich die Ausbildung der Schieber einfacher als für den drallerzeugenden Einlaßkanal 4. Ein dritter Schieber 58 dient zur Ausformung des äußeren Kanalabschnitts 27 des Einlaßkanals 6. Der dritte Schieber 58 grenzt an einen vierten Schieber 59 an, welcher der Hohlform des Abgasraums 20 entspricht. Letzterer wird parallel zur Zylinderachse in Ausziehrichtung gemäß Pfeil S4 gezogen; der dritte Schieber 58 wird in Richtung seiner Schraffur gemäß Pfeil S3 seitlich nach oben gezogen.

Aus der Draufsicht gemäß Fig. 2, erkennt man, daß der innerste Punkt P des den Drallkanal 12 ausbildenden ersten Schiebers 51 durch den Schnittpunkt zwischen der Außenkontur 60 des Drallkanals 12 und dem Grundkreis 17 des Drallraums 11 festgelegt ist. Der Punkt P bildet gleichzeitig den innersten Punkt des ersten Schiebers 51.

## Patentansprüche

1. Einzylinder-Dieselmotor mit einem Zylinderkopf (1), dessen Einlaßkanal (4) für die Verbrennungsluft einen Drallkanal (12) umfaßt, der in einen auf der Rückseite des Einlaßventils (13) angeordneten Drallraum (11) mündet
dadurch gekennzeichnet,
daß der Zylinderkopf als einteiliges Druckgußteil hergestellt ist und
daß sich der Drallkanal (12), in Richtung der Zylinderachse gesehen, nach außen hin zu beiden Seiten einer Bezugslinie zunehmend verbreitert, welche durch eine Tangente (54) an einem vom Drallkanal (12) umschlungenen, den Ventilschaft (18) des Einlaßventils (13) enthaltenden Kernteil (55) des Zylinderkopfs (1) gebildet ist, die durch den Schnittpunkt (P) zwischen der Außenkontur (60) des Drallkanals (12) und dem an die Ventilsitzbohrung (16) anschließenden Grundkreis (17) eines Drallraums (11), in welchen der Drallkanal (12) einmündet, verläuft.

2. Gießform zum Herstellen eines einteiligen Zylinderkopfs (1) für einen Einzylinder-Dieselmotor nach Anspruch 1, mit einem Einlaßkanal (4) für die Verbrennungsluft und einem Auslaßkanal (6) für das Abgas, wobei der Einlaßkanal (4) einen Drallkanal (12) umfaßt, der in einen auf der Rückseite des Einlaßventils (13) angeordneten Drallraum (11) mündet, wobei eine Druckgußform verwendet wird,
dadurch gekennzeichnet,
- daß zum Ausformen des Einlaßkanals (4) ein aus zwei Schiebern bestehender Kern vorgesehen ist,
- daß ein erster Schieber (51) mit seitlicher Ausziehrichtung (S1) im wesentlichen dem nach außen führenden Abschnitt (51a) des Drallkanals (12) entspricht und
- daß ein zweiter Schieber (52) mit parallel zur Zylinderachse verlaufender Ausziehrichtung (S2) im wesentlichen dem auf der Rückseite des Einlaßventils (13) angeordneten Drallraum (11) entspricht, zuzüglich dem in den Drallraum (11) mündenden inneren Abschnitt (51b) des Drallkanals (12).

3. Gießform nach Anspruch 2,
dadurch gekennzeichnet,
daß die beiden Schieber (51, 52) an eine gemeinsame, im wesentlichen parallel zur Zylinderachse verlaufende Trennfläche (53) angrenzen.

4. Gießform nach Anspruch 3,
dadurch gekennzeichnet,
daß die Trennfläche (53) eine zur seitlichen Ausziehrichtung (S1) etwa parallele Trennebene (53a) umfaßt.

5. Gießform nach Anspruch 4,
dadurch gekennzeichnet,
daß die Trennebene (53a), in Richtung der Zylinderachse gesehen, mit geringem Abstand von der Innenkontur (56) des Drallkanals (12) verläuft und an diese über eine senkrecht zur Trennebene (53a) verlaufende Querebene (57) angeschlossen ist.

6. Gießform nach Anspruch 2,
dadurch gekennzeichnet,
- daß zum Ausformen des Auslaßkanals (6) ein aus zwei weiteren Schiebern (58, 59) bestehender Kern vorgesehen ist,
- daß ein dritter Schieber (58) mit seitlicher Ausziehrichtung (S3) im wesentlichen einem nach außen mündenden Kanalabschnitt (27) mit geradliniger Strömungsachse entspricht und
- daß ein vierter Schieber (59) mit parallel zur Zylinderachse verlaufender Ausziehrichtung (S4) im wesentlichen einem auf der Rückseite des Auslaßventils (23) angeordneten Abgasraum (20) entspricht, aus welchem der Kanalabschnitt (27) ausmündet.

7. Gießform nach Anspruch 6,
dadurch gekennzeichnet,
daß das innere Ende des Kanalabschnitts (27) ein den Ventilschaft (26) des Auslaßventils (23) enthaltendes Kernteil (61) des Zylinderkopfs (1) halbkreisförmig umfaßt.

8. Gießform nach Anspruch 2,
dadurch gekennzeichnet,
daß parallel zur Zylinderachse durch die Decke (43) des Zylinderkopfs (1) ausziehbare stabförmige Formkerne (42) vorgesehen sind, mit welchen Durchbrüche (41) in benachbarte Kühlluftkanäle (28, 31; 36, 38) voneinander trennenden Rippen (31; 37) erzeugt werden.

## Claims

1. One-cylinder diesel engine with a cylinder head (1), whereof the inlet port (4) for the combustion air comprises a swirl channel (12), which opens into a swirl chamber (11) located on the rear side of the inlet valve (13), characterised in that the cylinder head is produced as a one-piece die-cast part and that seen in the direction of the cylinder axis, the swirl channel (12) widens out increasingly towards the outside on both sides of a reference line, which is formed by a tangent (54) to a core part (55) of the cylinder head (1) around which the swirl channel (12) winds and containing the valve shaft (18) of the inlet valve (13), which tangent extends through the intersection (P) between the outer contour (60) of the swirl channel (12) and the base circle (17) of a swirl camber (11) adjoining the valve seat bore (16), into which swirl chamber the swirl channel (12) opens.

2. Casting mould for producing a one-piece cylinder head (1) for a one-cylinder diesel engine according to Claim 1, with an inlet port (4) for the combustion air and an outlet port (6) for the exhaust gas, the inlet port (4) comprising a swirl channel (12), which opens into a swirl chamber (11) located on the rear side of the inlet valve (13), in which case a die-casting mould is used, characterised in that
- a core consisting of two slides is provided for stripping the inlet port (4),
- that a first slide (51) with a lateral withdrawal direction (S1) corresponds essentially to the section (51a) of the swirl channel (12) leading outwards and
- that a second slide (52) with a withdrawal direction (S2) extending parallel to the cylinder axis, corresponds essentially to the swirl chamber (11) located on the rear side of the inlet valve (13), with the addition of the inner section (51b) of the swirl channel (12) opening into the swirl chamber (11).

3. Casting mould according to Claim 2, characterised in that the two slides (51, 52) adjoin a common joint face (53) extending essentially parallel to the cylinder axis.

4. Casting mould according to Claim 3, characterised in that the joint face (53) comprises a plane of separation approximately parallel to the lateral withdrawal direction (S1).

5. Casting mould according to Claim 4, characterised in that the plane of separation (53a), seen in the direction of the cylinder axis, extends at a short distance from the inner contour (56) of the swirl channel (12) and is connected to the latter by way of a transverse plane (57) extending at right angles to the plane of separation (53a).

6. Casting mould according to Claim 2, characterised in that for stripping the outlet port (6), a core consisting of two further slides (58, 59) is provided,
- that a third slide (58) with a lateral withdrawal direction (53) corresponds essentially to a channel section (27) opening towards the outside with a rectilinear flow axis and
- that a fourth slide (59) with a withdrawal direction (S4) extending parallel to the cylinder axis corresponds essentially to an exhaust gas chamber (20) located on the rear side of the outlet valve (23), from which the channel section (27) opens out.

7. Casting mould according to Claim 6, characterised in that the inner end of the channel section (27) surrounds a core part (61) of the cylinder head (1) containing the valve shaft (26) of the outlet valve (23), in the form of a semicircle.

8. Casting mould according to Claim 2, characterised in that rod-shaped mould cores (42) are provided, which can be withdrawn parallel to the cylinder axis through the cover (43) of the cylinder head (1), by which openings (41) are produced in ribs (31; 37) separating adjacent cooling air channels (28, 31; 36, 38) from each other.

## Revendications

1. Moteur diesel monocylindre comprenant une culasse (1) dont le canal d'admission (4) pour l'air de combustion inclut un canal de tourbillonnement (12) qui débouche dans une chambre de tourbillonnement (11) située sur le côté arrière de la soupape d'admission (13), caractérisé par le fait que la culasse est réalisée sous la forme d'une pièce unitaire coulée sous pression et que le canal de tourbillonnement (12), vu dans la direction de l'axe du cylindre, s'élargit progressivement vers l'extérieur de part et d'autre d'une ligne de référence qui est formée par une tangente (54) à une partie de noyau (55) de la culasse (1), enveloppée par le canal de tourbillonnement (12) et contenant la tige (18) de la soupape d'admission (13), laquelle tangente passe par le point d'intersection (P) entre le contour extérieur (60) du canal de tourbillonnement (12) et le cercle de base (17) d'une chambre de tourbillonnement (11) dans laquelle débouche le canal de tourbillonnement (12), ledit cercle de base se raccordant à l'alésage (16) pour le siège de soupape.

2. Moule de coulée pour la fabrication d'une culasse unitaire (1) pour un moteur diesel monocylindre suivant la revendication 1, comprenant un canal d'admission (4) pour l'air de combustion et un canal d'échappement (6) pour les gaz d'échappement, le canal d'admission (4) englobant un canal de tourbillonnement (12) qui débouche dans une chambre de tourbillonnement (11) disposée sur le côté arrière de la soupape d'admission (13), avec utilisation d'un moule de coulée sous pression, caractérisé par le fait :
- qu'il comprend un noyau composé de deux tiroirs pour former le canal d'admission (4),
- qu'un premier tiroir (51) avec une direction d'extraction (S1) latérale correspond essentiellement au tronçon (51a) du canal de tourbillonnement (12), menant vers l'extérieur, et
- qu'un deuxième tiroir (52) avec une direction d'extraction (S2) parallèle à l'axe du cylindre correspond essentiellement à la chambre de tourbillonnement (12) disposée sur le côté arrière de la soupape d'admission (13), et en addition au tronçon intérieur (51b) du canal de tourbillonnement (12), débouchant dans la chambre de tourbillonnement (11).

3. Moule de coulée suivant la revendication 2, caractérisé par le fait que les deux tiroirs (51, 52) sont contigus à une surface de séparation (53) commune s'étendant essentiellement parallèlement à l'axe du cylindre.

4. Moule de coulée suivant la revendication 3, caractérisé par le fait que la surface de séparation (53) comprend un plan de séparation (53a) à peu près parallèle à la direction d'extraction (S1) latérale.

5. Moule de coulée suivant la revendication 4, caractérisé par le fait que le plan de séparation (53a), vu en direction de l'axe du cylindre, s'étend à faible distance du contour intérieur (56) du canal de tourbillonnement (12) et se raccorde audit contour par un plan transversal (57) s'étendant perpendiculairement au plan de séparation (53a).

6. Moule de coulée suivant la revendication 2, caractérisé par le fait
- qu'il comprend un noyau composé de deux tiroirs (58, 59) supplémentaires pour former le canal d'échappement (6),
- qu'un troisième tiroir (58) avec une direction d'extraction (53) latérale correspond essentiellement à un tronçon de canal (27) à axe d'écoulement rectiligne, débouchant vers l'extérieur, et
- qu'un quatrième tiroir (59) avec une direction d'extraction (S4) parallèle à l'axe du cylindre correspond essentiellement à une chambre d'échappement (20) qui est disposée sur le côté arrière de la soupape d'échappement (23) et à partir de laquelle part ledit tronçon de canal (27).

7. Moule de coulée suivant la revendication 6, caractérisé par le fait que l'extrémité intérieure du dit tronçon de canal (27) entoure en forme de demi-cercle une partie de noyau (61) de la culasse (1), contenant la tige (26) de la soupape d'échappement (23).

8. Moule de coulée suivant la revendication 2, caractérisé par le fait qu'il comprend des noyaux de moule (42) en forme de barreaux, qui sont extractibles parallèlement à l'axe du cylindre à travers la paroi supérieure (43) de la culasse (1), et à l'aide desquels sont produits des ajours (41) dans des ailettes (31 ; 37) séparant les uns des autres des canaux d'air de refroidissement (28, 31 ; 36, 38) voisins.
